Europäisches Patentamt

European Patent Office

Office européen des brevets

(11) Publication number: **0 068 556**
**B1**

(12) **EUROPEAN PATENT SPECIFICATION**

(45) Date of publication of patent specification: **05.06.85**

(51) Int. Cl.⁴: **A 23 L 1/36**

(21) Application number: **82200734.0**

(22) Date of filing: **14.06.82**

(54) Bran produced from sunflower seeds.

(30) Priority: **26.06.81 IT 2258181**

(43) Date of publication of application:
**05.01.83 Bulletin 83/01**

(45) Publication of the grant of the patent:
**05.06.85 Bulletin 85/23**

(84) Designated Contracting States:
**BE DE FR GB NL**

(56) References cited:
**DE-C- 529 510**
**FR-A- 907 776**
**GB-A- 642 321**

**CHEMICAL ABSTRACTS, vol.91, no.23,
December 1978, page 504, abstract
no.191611m, Columbus, Ohio (US), R.S.
KADAN et al.: "Air classification of defatted,
glanded cottonseed flours to produce edible
protein products"**

(73) Proprietor: **ANIC S.p.A.
Via Ruggero Settimo, 55
I-90139 Palermo (IT)**

(72) Inventor: **Zoani-Schimberni, Magda
Via Archimede 138
I-00197 Rome (IT)**
Inventor: **Sodini, Giancarlo
Via Anagnina 96
00046 Grottaferrata(Rome) (IT)**
Inventor: **Grillo, Franco
Via Valle Melaina 61
I-00139 Roma (IT)**
Inventor: **Canella, Marco
Via Seggiano 27
I-00139 Roma (IT)**

(74) Representative: **Roggero, Sergio et al
Ing. Barzanò & Zanardo Milano S.p.A. Via
Borgonuovo 10
I-20121 Milano (IT)**

Courier Press, Leamington Spa, England.

**0 068 556**

## Description

This invention relates to the preparation and alimentary and dietetic use of a new product produced from sunflower seeds and having a high insoluble dietetic fibre content, which originates from the processing of meal and is called sunflower bran in the text. This new product, which is constituted by the skin covering the kernel, processes chemical characteristics and functional properties which make it a very promising source of dietetic fibre.

Recent years have seen a growing interest by various researchers in dietetic fibre (defined as all that vegetable material which is resistant to hydrolysis by digestive enzymes), and an important role in human nourishment is attributed to its constituents.

New research on dietetic fibre chemistry (Cummings, J. H. Gut. 14, 69, 1973; McConnell, A. A. et al. J. Sci. Fd. Agr. 25, 1457, 1974) together with epidemiological observations (Painter, N. S. and Burkitt, D. P. British Medical J. 2, 450, 1971; Trowell, H. C. Amer. J. Clinical Nutrition, 25, 926, 1972) have reinforced the hypothesis that dietetic fibre possesses properties such as to make it a fundamental factor in the maintaining of health in man.

By acting on the intestinal peristalsis with reduction of the feces transit time (Harvey, R. F. et al. Lancet, 6/9, 1278, 1973; Kirwan, W. O. British Medical J. 4, 187, 1974), the fibre represents an effective remedy against constipation, and its use reduces the incidence of diverticulosis (Painter, N. S., Burkitt, D. P. British Medical J. 2, 450, 1971) and appendicitis (Walker, A. R. P. et al. South Africa Postgrad. Med. J. 49, 243, 1973).

Experimental evidence also suggests the possibility that dietetic fibre acts as a hypocholesterolemic and antiatherosclerotic agent (Moore, J. H. British J. Nutrition, 21, 207, 1967; Kritchevsky, D. et al. J. Food Sci. 40, 9, 1975) reduces the incidence of tumours of the colon (Burkitt, D. P., J. Roy. Coll. Phy. London, 9, 138, 1975) and performs a protective action against intestinal intoxication (Ershoff, Bott. J. Applied Nutrition, 26, 22, 1974).

As about 80% of flour and cereal products originates from wheat, the initial attempts in increasing fibre consumption used wheat as the vehicle for introducing this product on to the market. Rajchel C. L., et al. (Baker's Dig. 49, 27, 1975) have shown that bran can satisfactorily replace flour or part thereof in the preparation of baked products. Pomeranz, Y. et al. (Cereal Chem. 54, 25, 1977) have observed that a loaf of good quality could be prepared from wheat flour by replacing 7% of it with microcrystalline cellulose or wheat bran. Whereas on the one hand the use of wheat bran in various formulations and the use of wholemeal bread are becoming increasingly widespread, on the other hand in order to attain improved utilisation and recovery of by-products of the foodstuffs industry, it would be desirable to use new sources of dietetic fibre which are often represented by the by-products of foodstuffs processing.

By-products of the processing of rice (Mod. R. R. et al. J. Agric. Food Chem. 26, 1031, 1978) and of soys (Dintzis, F. R. et al. Cereal Chem. 56, 123, 1979), peanut husks (Childs, E. and Abajian, A. J. Food Sci. 41, 1235, 1976) and others have been experimented with successfully as possible fibre integrators in the human diet.

This invention proposes bran produced from sunflower seeds as a new source of insoluble dietetic fibre.

### Preparation of sunflower bran

Sunflower bran, constituted by the ground skin covering the kernel, was prepared by processing the meal (decortication and oil extraction using a solvent) in a pilot plant. On sieving the meal, which was carried out with 0.8 mm sieves, a fibrous product was obtained having a particle size greater than 0.8 mm and constituted by the skin covering the kernel (96—98%), fragments of husk (1.5—2.5%) and residual meal (0.5—1.5%). This intermediate material is known as crude sunflower bran, and represents 5—6% by weight of the initial meal.

A subsequent classification process carried out by air blowing in equipment which produces a cut at a terminal speed of 1.47 m/sec. separates the husk fragments and meal from the kernel covering skin on the basis of the different shape coefficients. This latter product, known as sunflower bran, represents 1% by weight of the initial meal, and has an insoluble dietetic fibre content which is greater than or equal to 60% by weight. The various stages in the preparation of sunflower bran are summarised on the following process flow diagram.

RAW SUNFLOWER

MEAL
↓
SIEVING→SUNFLOWER MEAL
↓
CRUDE BRAN
↓
RESIDUAL HUSK←AIR BLOWING
FRAGMENTS      ↓
SUNFLOWER BRAN

2

The sunflower bran leaving this process has the following particle size distribution:

| | |
|---|---|
| >1 mm | 86.5% |
| 1—0.8 mm | 3.5% |
| 0.8—0.63 mm | 6.5% |

The sunflower bran prepared by the aforesaid process can be used for alimentary and/or dietetic purposes, alone or in combination with other substances, either in the form of meal prepared by grinding the bran, or in the form of flavoured tablets, of oven products (bread, crackers, biscuits, bread sticks) or snacks.

Methods for chemically characterising sunflower bran

Humidity, lipids, ash and raw fibre were determined by the standard methods of the A.O.A.C. (Association Official Analytical Chemists, 12th Ed. 1975). The protein content was expressed as macrokjeldahl nitrogen×5.70. The dietetic fibre, cellulose, hemicellulose and lignin levels were determined by the method suggested by Anderson N. E. and Clydesdale F. M. (J. Food Sci. 45, 336, 1980). Total sugars were analysed by the methods of Dubois M. et al. (Anal. Chem. 28, 350, 1956). The constituent monosaccharides of the hemicellulose fraction were analysed by the method of Anderson N. E. and Clydesdale F. M. (J. Food Sci. 45, 336, 1980).

The chlorogenic, caffeic and quinic acid contents and the contents of glucose, saccharose and raffinose were determined by gas chromatography in accordance with the method of Sabir, M. A. et al. (J. Agr. Food Chem. 22, 572, 1974; J. Agr. Food Chem. 23, 16, 1975), using a HP 5840A gas chromatograph with automatic integrator. The phenols and oligosaccharides were extracted for the gas chromatography analysis by the method of Dubois M. et al. (Anal. Chem. 28, 350, 1956).

The mineral constituents were analysed using a Varian Techtron mod. 1200 atomic absorption spectrophotometer. The metals were attacked with a sulphonitric mixture in the ratio of 1:5 (weight/volume) in order to totally eliminate the organic substance, while phosphates and sulphates were extracted with 1 volume of 60—62% perchloric acid and 4 volumes of 69—71% nitric acid in the ratio of 1:20 (weight/volume) and measured at 350 mm with the addition of barium chloride.

The aminoacids were analysed by the method of Spackman, D. H. et al (Anal. Chem. 30, 1190, 1958) using a Beckman automatic analyser mod. 120C.

The cysteine and methionine were calculated by the method of Moore S. (J. Biol. Chem. 238, 235, 1963).

The tryptophan was analysed by the method of Knox R. et al. (Anal. Biochem. 36, 136, 1970).

Chemico-physical and functional properties

The sunflower bran and wheat samples for functional property determination were ground to 35 mesh in a Buhler grinding mill mod. MLI-204.

Water and oil absorption were determined using a method similar to that reported by Janicki N. A. and Walczak J. (Adv. Food Res. 10, 355, 1960).

10 ml of water or oil were added to 0.5—1.0 g samples in a centrifuging tube. After stirring with a glass rod, they were allowed to rest for 30 minutes and then centrifuged at 15000×g for 15 minutes.

The decanted supernatant volume was measured in a graduated cylinder, and the volume of water and oil retained by 1 gram of sample was calculated by difference.

Measurements of apparent density, density of the sample mass and density of the hydrated sample were made by the methods proposed by Parrott M. E. and Thrall B. E. (J. Food Sci. 43, 759, 1978). The water retention capacity was measured by the method of McConnell A. A. et al. (J. Sci. Food Agr. 25, 1457, 1974).

The cationic exchange capacity was determined by the method suggested by Robertson J. A. et al. (J. Sci. Food Agr. 31, 633, 1980).

Examples

All operating details are apparent from reading the following examples, the purpose of which is only to illustrate the invention without limiting it.

Example 1

After sieving with a 0.8 mm sieve, 100 kg of sunflower meal provided 6 kg of crude bran. This product was subjected to an air blowing classification process carried out with a conical classifier of 750 mm diameter, and was fed at a throughput of 12 kg/h. On operating with an air throughput of 1700 Nm³/h, corresponding to a cut at a terminal speed of 1.66 m/sec., 2.2 kg of sunflower bran were obtained. This product was not suitable for alimentary or dietetic use because of the visual presence of residual husk fragments which showed up as black spots in the sample.

Example 2

6 kg of crude sunflower bran obtained from 100 kg of meal by sieving as described in Example 1 were subjected to air blowing using a conical classifier of 750 mm diameter, the product being fed at a throughput of 12 kg/h.

On reducing the air throughput to 1500 Nm³/h, corresponding to a cut at a terminal speed of 1.47 m/sec., 1.8 kg of sunflower bran were obtained.

The separation of the covering skin of the kernel from the other components of the seed was considered satisfactory in that the product was practically free from dark husk fragments. The chemical and chemico-physical characteristics of this sample of sunflower bran were studied, and its functional properties determined. This investigation is reported in the following paragraphs.

Chemical characterisation of the sunflower bran

The composition of the sunflower bran prepared as described in Example 2 is shown in Table 1.

The analytical data of the sunflower bran are compared with a sample of wheat bran taken as the reference product.

TABLE 1
Chemical composition of the sunflower bran
(g/100 g of dry substance)

|  | SUNFLOWER BRAN % | WHEAT BRAN % |
|---|---|---|
| Moisture | 7.5 | 12.3 |
| Proteins (N×5.70 | 16.8 | 16.2 |
| Lipids | 1.2 | 3.2 |
| Ash | 3.6 | 6.1 |
| Soluble sugars | 5.2 | 8.1 |
| Raw fibre | 26.8 | 10.6 |
| Non-nitrogenated extracts (difference 100%) | 46.4 | 55.8 |

Table 2 shows the constituents of the fibre in the sunflower bran.

TABLE 2
Composition of the sunflower bran fibre
(g/100 g of dry substance)

|  | SUNFLOWER BRAN | WHEAT BRAN |
|---|---|---|
| Dietetic fibre | 66.4 | 52.9 |
| Cellulose | 24.7 | 13.1 |
| Hemicellulose | 36.9 | 34.9 |
| Lignin | 4.8 | 4.9 |

Sunflower bran is proposed as a new interesting source of insoluble alimentary fibre in that it shows a dietetic fibre content (66.4%) and a cellulose content (24.7%) exceeding the corresponding values of wheat bran (52.9 and 13.1% respectively), while its hemicellulose and lignin contents are similar.

The constituent monosaccharides of the hemicellulose fraction of the sunflower bran, determined by gas chromatography, are given in Table 3.

# 0 068 556

### TABLE 3
Percentage composition of the constituent monosaccharides
of the sunflower bran hemicellulose fraction

|  | SUNFLOWER BRAN % | WHEAT BRAN % |
| --- | --- | --- |
| Arabinose | 53.7 | 25.2 |
| Xylose | 9.3 | 38.3 |
| Mannose | 15.0 | 0.2 |
| Galactose | 20.2 | 2.2 |
| Glucose | 1.8 | 34.1 |

A high arabinose content (53.7%) is noted in the sunflower bran, and mannose and galactose values higher than the corresponding values for the wheat bran are also seen, whereas the xylose and glucose are the monosaccharides most representative of the hemicellulose fraction of the wheat bran.

Table 4 shows data relative to the gas chromatograph determination of the phenols and oligosaccharides in the sunflower bran.

### TABLE 4
Chemical analysis of phenols and oligosaccharides in the sunflower bran
(g/100 g of dry substance)

|  | % |
| --- | --- |
| Chlorogenic acid | 0.65 |
| Caffeic acid | 0.17 |
| Quinic acid | 0.08 |
| Glucose | 0.05 |
| Saccharose | 2.73 |
| Raffinose | 0.64 |

The sunflower bran contains part of the polyphenol pigments present in the seed, and of these the chlorogenic acid is the main constituent (0.65%). The chlorogenic acid content of the skin is about one third, the saccharose one half and the raffinose one fifth of the phenols and oligosaccharides in the meal (Canella M. et al. Riv. It. Sost. Grasse, 53, 156, 1976).

Table 5 shows the levels of the mineral constituents of the sunflower bran compared with the corresponding values for the wheat bran.

5

**0 068 556**

TABLE 5
Determination of mineral constituents in the sunflower bran
(g/100 g of dry substance)

|  | SUNFLOWER BRAN % | WHEAT BRAN % |
|---|---|---|
| Lead | absent | absent |
| Copper | absent | absent |
| Manganese | absent | 0.01 |
| Iron | 0.04 | 0.06 |
| Magnesium | 0.56 | 0.83 |
| Potassium | 1.63 | 1.27 |
| Sodium | 0.03 | 0.04 |
| Calcium | 0.22 | 0.11 |
| Phosphates | 0.38 | 0.36 |
| Sulphates | 0.92 | 0.35 |
| Nitrates | 0.06 | 0.55 |

The content of the various elements is comparable for the two products. With regard to the salts, sulphates (0.92%) predominate in the sunflower bran, whereas nitrates (0.55%) predominate in the wheat bran.

The aminoacid composition of the sunflower bran and wheat bran is given in Table 6.

TABLE 6
Aminoacid composition of the sunflower bran and wheat bran
(g/16 g of nitrogen)

| Aminoacid | SUNFLOWER BRAN | WHEAT BRAN |
|---|---|---|
| Lysine | 4.2 | 4.0 |
| Histidine | 1.9 | 2.2 |
| Arginine | 5.2 | 6.0 |
| Aspartic | 6.2 | 7.1 |
| Tryptophan | 1.4 | 1.9 |
| Threonine | 3.2 | 3.1 |
| Serine | 4.1 | 5.0 |
| Glutamic | 12.0 | 25.7 |
| Proline | 3.6 | 5.9 |
| Glycine | 7.0 | 6.1 |
| Alanine | 3.6 | 5.4 |
| Valine | 3.7 | 5.2 |
| Isoleucine | 3.3 | 3.5 |
| Leucine | 5.1 | 6.8 |
| Tyrosine | 2.7 | 3.2 |
| Phenylalanine | 3.3 | 4.3 |
| Methionine+cystine | 3.6 | 3.3 |
| Ammonia | 1.0 | 1.2 |

The aminoacid distribution in the sunflower seed skin is not very dissimilar to the aminoacid pattern of the meal (Canella M. et al. Riv. It. Sost. Grasse, 53, 156, 1976). The lysine and glycine levels in the bran are higher than in the meal, whereas there is a reduction in glutamic acid and in arginine, histidine and aspartic acid. In comparing the aminoacid values for the sunflower bran and wheat bran (see Table 6), this latter product shows greater contents of glutamic acid, proline, alanine and valine.

Chemico-physical and functional properties of sunflower bran

Because of the recent importance attributed to the role of dietetic fibre in nutrition, its advantages in the prevention and cure of various illnesses and the increased interest in the scientific field, it was necessary for purposes of research in the foodstuffs sector to develop methods which would allow a more accurate investigation of the use of fibre-based products in commercial formulations. At the present time, a wide range of potential dietetic fibre sources is available, however the identification of a particular physiological effect of a given product is made difficult by the various chemical constituents of dietetic fibre not yet completely defined and by the interactions, particularly of a physical nature, which these substances undergo during their gastrointestinal transit. Thus in addition to the chemical characterisation of a fibrous material, it is also necessary to examine certain chemicophysical and functional parameters which represent a valid basis for predicting the metabolic effects of the sample under study.

The main chemico-physical characteristics involved in investigating fibre-rich products comprise water and oil absorption properties, density measurements, cationic exchange capacity and particle size distribution of the sample.

Table 7 shows the main functional characteristics of sunflower bran and of the wheat bran used as the reference sample.

## 0 068 556

### TABLE 7
#### Functional properties of sunflower bran and wheat bran

| | SUNFLOWER BRAN | WHEAT BRAN |
|---|---|---|
| Water absorption (ml/g of dry substance) | 5.3 | 4.5 |
| Oil absorption (ml/g of dry substance) | 6.3 | 3.8 |
| Direct density | 0.13 | 0.26 |
| Bulk density (g/cc) | 0.40 | 0.66 |
| Water displacement measurement (g sample/ml water displaced | 2.7 | 1.3 |
| Water retention capacity (ml/g of dry substance) | 7.1 | 5.9 |
| Cationic exchange capacity (meq/g of dry fibre) | 0.37 | 0.16 |

The sunflower bran proves to be a lighter material than wheat bran, and has an apparent density and bulk density which are less than the wheat bran sample.

The water and oil absorption properties are higher in the sunflower bran (5.3 and 6.3 ml/g of dry substance) than in the wheat bran (4.5 and 3.8 ml/g of dry substance respectfully). However, the difference in the fat absorption capacity is considerable. This characteristic, which is very marked in the sunflower bran sample, could also depend on the contribution of the high number of hydrophobic groups present in the sunflower proteins, with consequent greater affinity for the hydrocarbon chains in fats (Canella M. et al. Riv. It. Sost. Grasse, 54, 73, 1977).

The higher cellulose content of the sunflower bran than of the wheat bran (see Table 2) is reflected in the greater water retention capacity (7.1 ml/g of dry substance) of this former product (5.9 ml/g of dry substance in the case of the wheat bran), i.e. in improved hydrophilic properties attributed largely to the cellulose.

A further chemico-physical property which can indicate possible biological effects of the fibre is its cationic exchange capacity. Whereas the water retention capacity reflects the property of the fibre to swell and thus increase the weight and volume of the feces, the cationic exchange capacity probably influences the electrolyte metabolism in the organism. The sunflower bran shows a good aptitude for cationic exchange (0.37 meq $g^{-1}$ of dry fibre), which is greater than for the sample of wheat bran (0.16 meq $g^{-1}$ of dry fibre).

### Claims

1. A pure sunflower bran processed by decortication and solvent extraction of sunflowerseed meal, followed by a sieving treatment and an air blowing treatment, characterized in that the air blowing step is carried out with an air throughput of 1500 $Nm^3$/sec, a cut being effected at a terminal speed of 1.47 m/sec, whereby a bran with a dietetic fibre content equal to at least 60% is obtained.

2. A pure sunflower bran as obtained by the process according to Claim 1, characterized in that the sieving treatment is carried out with a 0,8 mm sieve.

3. Use of a pure sunflower bran as obtained by the process of Claim 1 as a dietetic replacement in human nourishment.

### Patentansprüche

1. Reine Sonnenblumenkleie, hergestellt durch Enthülsen und Lösungsmittelextraktion von Sonnenblumensamenmehl gefolgt von einer Siebbehandlung und Luftdurchblasen-Behandlung, dadurch gekennzeichnet, daß der Schritt des Luftdurchblasens durchgeführt wird mit einem Luftdurchsatz von 1500 $Nm^3$/sec, wobei ein Schnitt bewirkt wird bei einer Endgeschwindigkeit von 1,47 m/sec, wodurch eine Kleie mit einem diätetischen Fasergehalt gleich wenigstens 60% erhalten wird.

2. Reine Sonnenblumenkleie erhalten durch das Verfahren gemäß Anspruch 1, dadurch gekennzeichnet, daß die Siebbehandlung mit einem 0,8 mm Sieb durchgeführt wird.

3. Verwendung einer reinen Sonnenblumenkleie erhalten nach dem Verfahren gemäß Anspruch 1 als diätetischer Ersatz bei der menschlichen Ernährung.

**0 068 556**

**Revendications**

1. Son pur de tournesol traité par décortication et par extraction à l'aide d'un solvant de la farine de tournesol suivie par un traitement de tamisage et par un traitement de soufflage d'air, caractérisé en ce que la phase de soufflage d'air est exécutée avec un débit d'air de 1500 Nm$^3$/s, une coupe étant effectuée à une vitesse finale de 1,47 m/s, grâce à quoi on obtient un son ayant une teneur en fibres égale à au moins 60%.

2. Son pur de tournesol obtenu à l'aide du procédé selon la revendication 1, caractérisé en ce que le traitement de tamisage est effectué avec un tamis à mailles de 0,8 mm.

3. Utilisation d'un son pur de tournesol tel qu'obtenu à l'aide du procédé de la revendication 1, en tant que replacement diététique dans l'alimentation pour les humains.